# FASCICULE DE BREVET EUROPEEN

(11) **EP 0 401 085 B1**
(45) Date de publication et mention de la délivrance du brevet: **16.02.1994**
(21) Numéro de dépôt: 90401365.3
(22) Date de dépôt: 22.05.1990
(51) Int. Cl.: H02B 1/28, H02B 1/46

(54) **Boîtier en particulier pour le logement d'appareils électriques à charnières intégrables**
Gehäuse, insbesondere für elektrische Geräte mit Einbauscharnieren
Casing especially for housing electrical apparatus with built-in hinges

(30) Priorité: 31.05.1989 FR 8907159
(43) Date de publication de la demande: 05.12.1990
(73) Titulaire: OKW ODENWALDER KUNSTSTOFFWERKE GmbH & Co, 74722 Buchen (DE); ROLEC, Société dite:, D-31737 Rinteln (DE); SCHMITT, Société dite:, D-66131 Saarbrücken (DE); ROGER, Société dite:, D-66131 Saarbrücken (DE)
(72) Inventeur: Altmann, Joachim, D-6453 Seligenstadt (DE); Rose, Friedhelm, D-4952 Porta Westfalica (DE); Schwartz, Roman, D-6601 Saarbrücken-Ensheim (DE); Schmitt, Horst, F-67260 Wolfskirchen (FR)
(74) Mandataire: Lerner, François

(56) Documents cités:
- FR-A- 2 099 120
- GB-A- 2 115 614
- GB-A- 2 151 859

## Description

L'invention a pour objet des perfectionnements à des boîtiers pour le logement en particulier d'appareils électriques ou électroniques. L'invention se rapporte plus particulièrement à des boîtiers de forme générale parallélépipédique rectangle du type comportant un corps sur lequel vient s'adapter de façon étanche un couvercle.

Pour réaliser l'étanchéité à la fermeture, il est connu de prévoir, aux quatre angles du couvercle, des vis qui viennent se visser en regard dans les quatre angles du corps, comme par exemple dans la publication GB-A-2 115 614 où, de surcroît, une zone centrale creuse d'étanchéité est limitée périphériquement, sur l'une des pièces, par une paroi d'encadrement en saillie, et, sur l'autre pièce, par une feuillure coopérante (renfermant ici un joint).

Conformément à ce document, cette bordure d'étanchéité est tout à fait périmétrique, les moyens de fixation entre le corps et le couvercle se trouvant ainsi à l'intérieur de cette zone. Cela peut être dommageable pour l'étanchéité.

Aussi, sera-t-il préféré, dans le cadre de la présente invention, que toutes les vis de fixation du boîtier traversent des parties de ce boîtier situées à l'extérieur du volume central qui, à l'exclusion desdites vis, sera périphériquement limité par la paroi d'encadrement saillante et/ou la feuillure précitée(s).

Si un tel mode de fermeture et de fixation donne satisfaction au niveau de l'étanchéité, il n'est pas toujours très pratique pour l'utilisateur si ce dernier veut avoir un accès aux appareils contenus dans le boîtier. En effet la solution ainsi préconisée oblige, pour ouvrir le boîtier, à dévisser les quatre vis et à retirer entièrement le couvercle.

Dans ces conditions certains utilisateurs demandent que le couvercle soit fixé d'un côté sur le corps du boîtier par un système de charnières monté en lieu et place des vis de fixation correspondantes, la bonne fermeture en application du couvercle sur le corps du boîtier étant obtenue seulement par le vissage, en coopération avec ces charnières, des deux vis prévues sur le côté opposé de fermeture du boîtier. Cette solution est limitée en ce qui concerne les normes d'étanchéité. En outre elle oblige l'utilisateur, ou le fabricant du boîtier,à prévoir des reprises du corps et du couvercle pour la fixation des charnières, opérations relativement coûteuses et malaisées.

A ce sujet, à partir du brevet FR-A-2 099 120, on connaît en particulier un boîtier pour appareillage électrique, composé d'un corps et d'un couvercle, et équipé, d'un côté, d'un joint périphérique saillant délimitant un périmètre étanche, des vis de fixation étant disposées à l'extérieur de ce périmètre pour relier le couvercle au corps, deux de ces vis se prolongeant, en quelque sorte, par des tiges flexibles jouant le rôle de charnières et pouvant être reçues dans des logements adaptés, une fois le boîter fermé.

Pour intéressante qu'elle soit, cette solution nécessite toutefois la présence d'un nombre relativement important de pièces pour permettre au système à tiges flexibles de jouer ses rôles à la fois d'élément de liaison étanche et d'élément d'articulation entre le corps et le couvercle.

Compte-tenu de cela, si un défaut survient, l'étanchéité du boîtier risque de n'être plus parfaite.

En outre, ce système nécessite une profondeur relativement importante du corps (ou éventuellement du couvercle) permettant d'y loger, à l'endroit de zones réservées, les tiges en question et leurs pièces-supports ; tout ceci impliquant un temps de montage/démontage de ces pièces relativement long, en particulier si l'on veut limiter les risques de coincement, lors du coulissement des tiges.

L'invention a pour objet de résoudre ces diverses difficultés en permettant de conserver une fermeture d'étanchéité parfaite par quatre vis prévues aux quatre angles du boîtier et en permettant parallèlement à l'utilisateur d'adapter lui-même facilement et rapidement des charnières sur l'un quelconque des côtés du boîtier pour obtenir un dispositif à couvercle articulé sur le corps du boîtier s'il le souhaite, et ceci en toute fiabilité, quelle que soit notamment la profondeur du boîtier.

A cet effet, le boîtier conforme à l'invention, de forme générale parallélépipédique rectangle, comportant un corps sur lequel peut donc s'articuler, au moyen d'au moins une charnière montée sur un côté latéral ou longitudinal du boîtier, un couvercle qui peut également se fixer sur le corps par des vis traversant le boîtier vers ses quatre angles, ledit corps et ledit couvercle présentant en chacun de leurs quatre angles et vers leur face interne, des zones réservées en creux formées autour d'un volume intérieur du boîtier limité extérieurement du côté du corps par une paroi d'encadrement en saillie, lesdites zones présentant chacune un logement en creux susceptible de recevoir un pied d'une dite charnière qui vient se fixer à cheval sur un côté voulu du corps et du couvercle, se caractérise en ce que :
- le couvercle comporte, en correspondance de la paroi d'encadrement saillante du corps, une feuillure coopérante à l'extérieur de laquelle sont formées lesdites zones réservées en creux, et,
- lesdites zones en creux du corps et du couvercle présentent chacune, à côté dudit logement susceptible de recevoir un pied de charnière, un orifice qui est formé en étant décalé vers le centre du boîtier pour le passage de vis traversantes de fixation en fermeture étanche du couvercle sur le corps.

De préférence, la (chaque) charnière d'articulation du boîtier comportera deux pieds en forme de pions réunis par une languette en forme générale de U, de V ou de U à fond en V, le tout étant moulé en une seule pièce, en matière plastique souple de qualité appropriée.

L'invention et sa mise en oeuvre apparaîtront encore plus clairement à l'aide de la description qui va suivre faite en référence aux dessins annexés dans lesquels :
- la figure 1 est une vue générale en perspective d'un boîtier conçu pour recevoir des charnières intégrables conformément à l'invention, le couvercle étant montré en position ouverte et articulée sur le corps du boîtier ;
- la figure 2 est une vue de face du corps du boîtier vu de l'intérieur dans le sens de la direction de la flèche II de la figure 1 ;
- la figure 3 est une vue du même corps de boîtier en plan de l'autre côté dans le sens de la flèche III de la figure 1 ;
- la figure 4 est une vue en plan du couvercle de boîtier vu de l'intérieur dans la direction de la flèche IV de la figure 1 ;
- la figure 5 est une vue en plan du couvercle vu de l'extérieur dans le sens de la flèche V de la figure 1 ;
- la figure 6 est une vue de détail en coupe avec arrachement faite au niveau des plans de coupe repérés VI-VI des figures 2 et 4 du corps du boîtier et du couvercle du boîtier en position d'assemblage, au niveau d'une charnière, le couvercle étant supposé articulé en position de pleine ouverture à 180° par rapport au corps du boîtier ;
- la figure 7 est une vue semblable à celle de la figure 6 mais montrant les positions respectives des pièces lorsque le couvercle a été basculé à 180° par dessus le corps du boîtier selon la flèche VII de la figure 6, étant supposé de surcroît que les vis de serrage en fermeture étanche du boîtier sont en place ;
- la figure 8 est une vue à plus grande échelle en coupe médiane d'une charnière ;
- les figures 9 et 10 sont des vues respectivement de dessous et de dessus de la charnière de la figure 8 selon les flèches IX et X respectivement de la figure 8.

En se reportant aux dessins et tout d'abord plus particulièrement à la figure générale 1, le boîtier est composé de façon classique d'un corps de boîtier 11 et d'un couvercle de boîtier 12 coopérant de façon à enfermer entre eux de manière étanche un volume de protection dans lequel seront logés des appareils électriques, électroniques et autres. Dans l'exemple illustré, de façon classique, l'étanchéité du volume de protection est obtenue par conjugaison d'une paroi d'encadrement 13 en relief formée vers le pourtour extérieur du corps 11 qui vient s'engager dans une feuillure ou rainure de forme correspondante 14 ménagée dans le couvercle 12 de telle façon que la paroi 13 pénètre en étanchéité dans la feuillure 14 lorsque le couvercle est appliqué en fermeture sur le corps du boîtier.

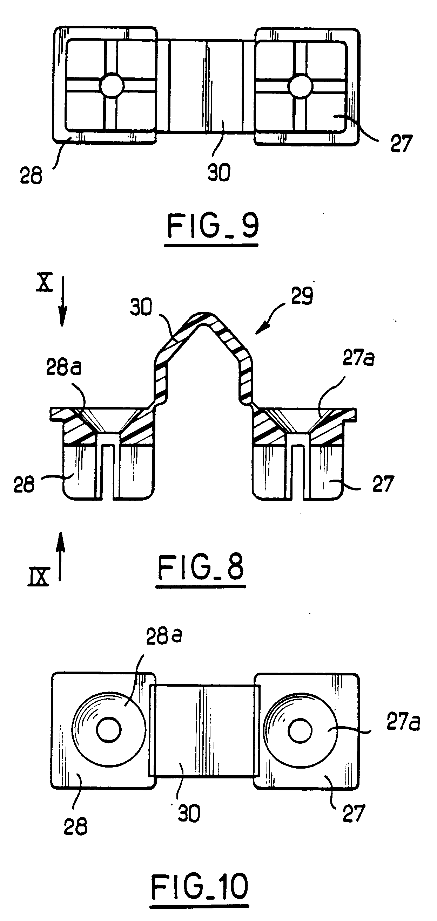

De façon connue, la fermeture étanche du boîtier peut être obtenue notamment par l'utilisation de quatre vis de serrage 15, 16, 17 et 18 prévues aux quatre angles du boîtier traversant le corps et le couvercle et permettant un serrage approprié des deux parties du boîtier l'une sur l'autre, comme il apparaît plus clairement à la figure 7 dans laquelle la vis 15 apparaît en fixation de serrage réunissant le couvercle 12 au fond 11 et maintenant en engagement la paroi 13 dans la feuillure 14.

Bien entendu les vis en question sont placées à l'extérieur du pourtour d'étanchéité de fermeture du boîtier, comme il apparaît clairement aux dessins, et comme cela est encore classique.

Comme indiqué précédemment, cette solution n'est cependant pas entièrement pratique au niveau de l'utilisateur qui peut souhaiter faciliter l'ouverture du boîtier en prévoyant une articulation d'un côté du couvercle sur le corps.

Selon l'art antérieur, dans un tel cas, on supprime alors deux des vis de fixation du couvercle et du boîtier, par exemple les vis 15 et 16 et l'on monte sur les côtés en regard du boîtier du couvercle deux charnières constituées généralement chacune d'une simple languette plane chevauchant le boîtier et le couvercle, ceci nécessitant une reprise en usinage du boîtier et du couvercle pour ménager le passage de la languette (laquelle apparaît visible à l'extérieur due boîtier) et la fixation correcte de la languette d'articulation sur le couvercle et sur le corps.

Outre les difficultés de réaliser correctement ces reprises d'usinage et le coût que cela implique, la solution n'est pas entièrement satisfaisante, l'étanchéité étant moins bien assurée au niveau de l'articulation que par un serrage convenable de vis, la solution étant de surcroît inesthétique.

Conformément à l'invention, la solution consiste à prévoir en chacun des quatre angles du corps 11 et du couvercle 12 du boîtier des zones réservées formées en creux de faible surface, à l'extérieur de la feuillure et de la paroi coopérantes du couvercle et du corps du boîtier, lesdites zones étant formées chacune respectivement avec un logement en creux susceptible de recevoir, qui vient s'y fixer en retrait dans le volume général du boîtier, le pied d'une charnière qui vient se fixer à cheval sur le côté voulu du corps et du couvercle. De façon plus précise ces zones ont été? repérées respectivement 19, 20, 21, 22 pour le corps 11 et 23, 24, 25, 26 pour le couvercle 12.

Comme il apparaît nettement sur les figures et de façon particulièrement nette à la figure 6 chaque zone ainsi réservée telle que 22, 23 comporte un logement en creux respectivement 22a, 23a susceptible de recevoir comme il sera décrit plus en détail ci-après le pied tel que repéré 27, 28 d'une charnière 29 qui vient se fixer à cheval sur le côté voulu du corps 11 et du couvercle 12.

A la même figure 6 on aperçoit également que dans ces zones réservées sont également formées des orifices respectivement 22b, 23b décalés vers le centre du boîtier par rapport aux orifices 22a, 23a pour le passage et la fixation de la vis telle que 15 de fixation et de serrage en étanchéité du couvercle sur le boîtier dans la position de fermeture, comme il apparait plus clairement à la figure 7.

Aux figures 8, 9 et 10 on aperçoit plus précisément la constitution des charnières comprenant leurs deux pieds 27, 28 en forme de pions généralement cubiques réunis par une languette 30 à section en forme générale de U à fond en V élastiquement déformable.

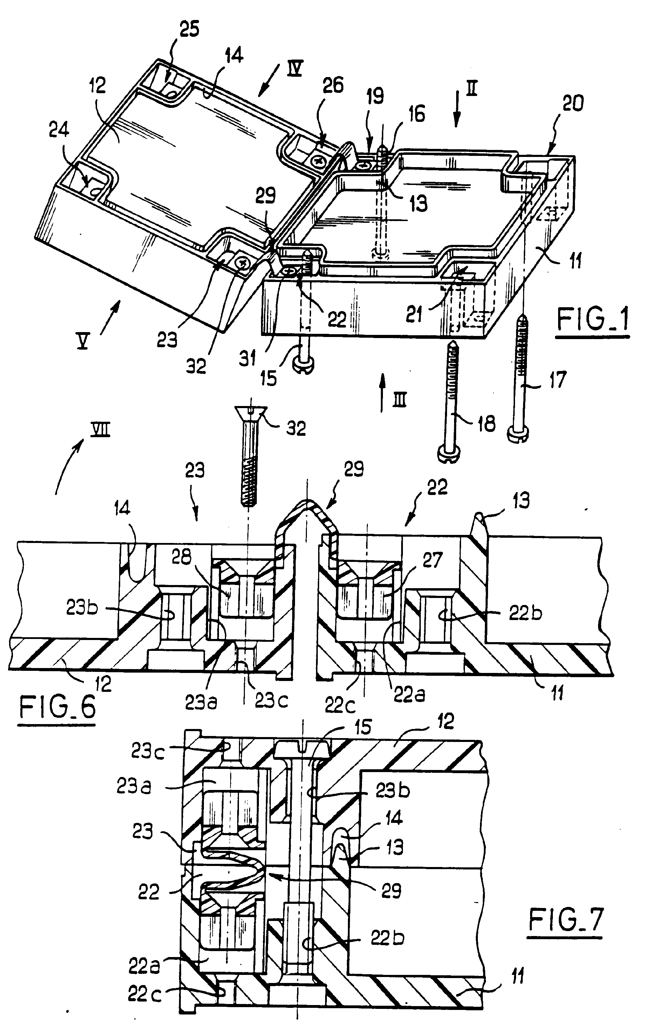

Dans ces figures il apparait également que chaque pion tel que 27, 28 présente sur son dessus un chanfrein tel que 27a, 28a pour le logement de la tête de vis de fixation telle que 31, 32 (figures 1 et 6). Chaque pied tel que 27, 28 est avantageusement fendu par exemple en croix (figure 9) pour une meilleure adaptation dans son logement récepteur tel que 22a, 23a.

Il apparaît qu'avec une telle conception lorsque les charnières sont intégrées au boîtier et que celui-ci est serré au moyen de ses vis de fixation telles que 15, 16, 17, 18, les charnières telles que la charnière 29 (figure 7) sont entièrement escamotées à l'intérieur du volume extérieur du boîtier et précisément dans les volumes des zones réservées en creux précitées telles que 22, 23.

Il apparaît également que les charnières peuvent être utilisées ou non utilisées selon la volonté de l'utilisateur et qu'elles peuvent être montées sur n'importe quel côté longitudinal ou latéral du boîtier, selon qu'on souhaite que le boîtier s'ouvre de gauche à droite ou de droite à gauche ou encore de haut en bas ou de bas en haut.

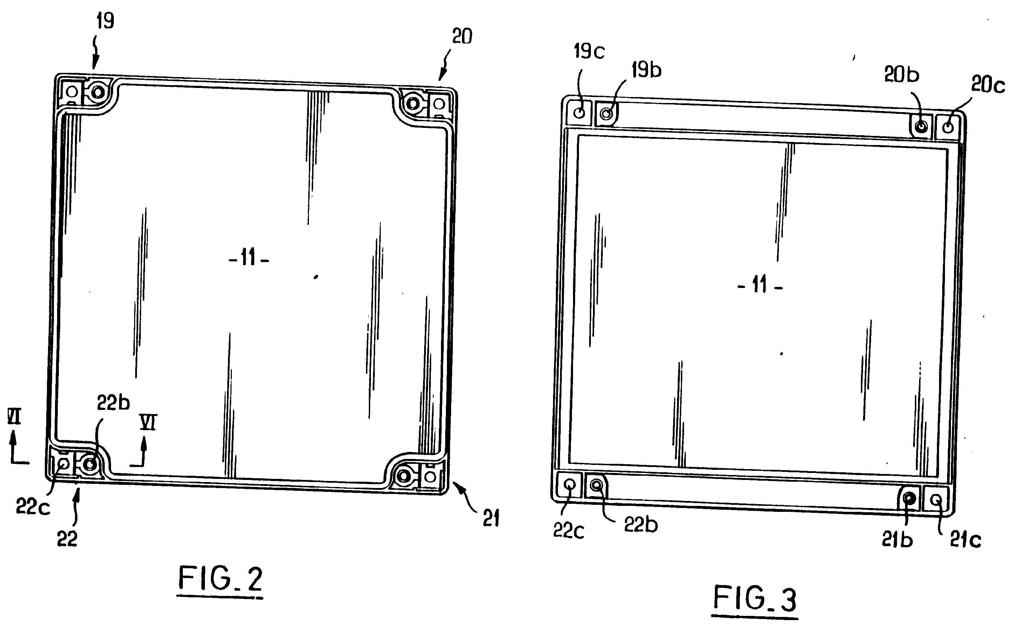

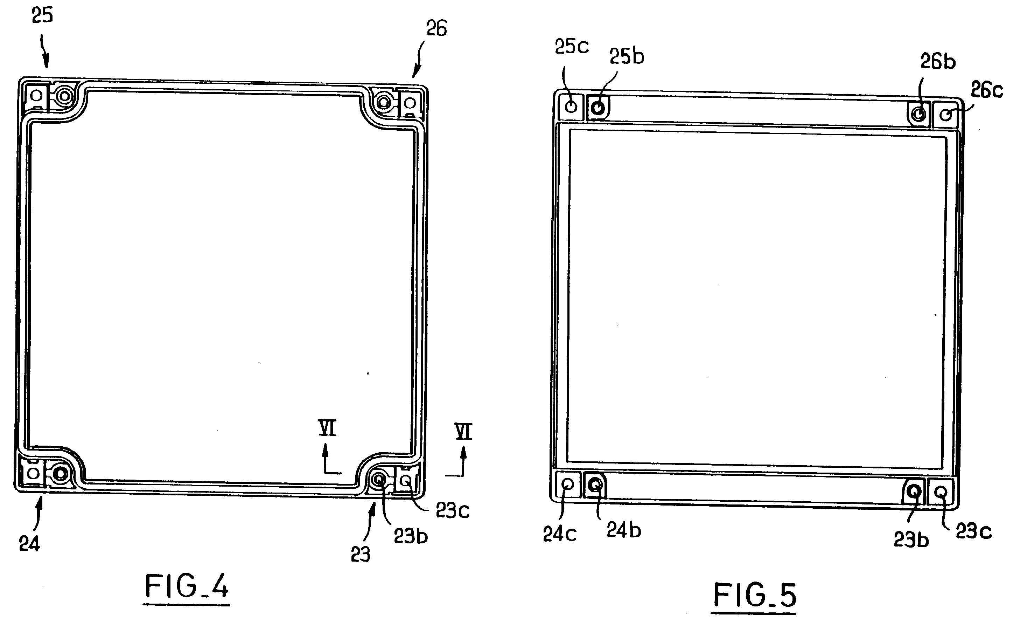

Aux figures 3 et 5 on a repéré pour plus de clarté les orifices traversants formés dans le corps 19b, 20b, 21b, 22b et dans le couvercle 23b, 24b, 25b, 26b pour le passage et le serrage des vis d'étanchéité 15 à 18, et on a repéré en 19c, 20C, 21c, 22c d'une part, et en 23c, 24c, 25c, 26c, d'autre part, les orifices traversants formés dans le corps et dans le couvercle pour la fixation des vis telles que 31, 32 des pieds de charnière.

## Revendications

1. Boîtier de forme générale parallélépipédique rectangle, comportant un corps (11) sur lequel peut s'articuler, au moyen d'au moins une charnière (29) montée sur un côté latéral ou longitudinal du boîtier, un couvercle (12) qui peut également se fixer sur le corps par des vis (15, 16, 17, 18) traversant le boîtier vers ses quatre angles, ledit corps et ledit couvercle présentant en chacun de leurs quatre angles et vers leur face interne, des zones réservées en creux (19-22, 23-26) formées autour d'un volume intérieur du boîtier limité extérieurement du côté du corps (11) par une paroi (13) d'encadrement en saillie, lesdites zones présentant chacune un logement (22a, 23a) en creux susceptible de recevoir un pied (27, 28) d'une dite charnière qui vient se fixer à cheval sur un côté voulu du corps et du couvercle, caractérisé en ce que :
- le couvercle (12) comporte, en correspondance de la paroi d'encadrement saillante (13) du corps (11), une feuillure (14) coopérante à l'extérieur de laquelle sont formées lesdites zones réservées en creux (23, 26), et,
- lesdites zones en creux du corps et du couvercle présentent chacune, à côté dudit logement (22a, 23a) susceptible de recevoir un pied (27, 28) de charnière, un orifice (22b, 23b) qui est formé en étant décalé vers le centre du boîtier pour le passage de vis traversantes (15, 18) de fixation en fermeture étanche du couvercle sur le corps.

2. Boîtier selon la revendication 1 caractérisé en ce que chacun desdits logements en creux (22a, 23a) pour la fixation d'un pied de charnière comporte un orifice (22c, 23c) pour recevoir une vis (32) de fixation du pied de charnière.

3. Boîtier selon l'une quelconque des revendications précédentes caractérisé en ce qu'il comprend deux charnières (29) disposées à l'endroit de deux côtés en regard du corps et du couvercle, chaque charnière comportant deux pieds (27, 28) présentant une forme de pion réunis par une languette (30) en forme générale de U, de V ou de U à fond en V, les pieds et la languette étant moulés en une seule pièce, en matière plastique flexible.

4. Boîtier selon la revendication 3, caractérisé en ce que chaque pied (27, 28) présente un dessus avec un chanfrein (27a, 28a) pour recevoir une tête d'une vis de fixation adaptée pour pénétrer dans un orifice coopérant ménagé dans chacun desdits logements des zones réservées du corps et du couvercle, respectivement.

5. Boîtier selon la revendication 3 ou la revendication 4 caractérisé en ce que chaque pied (27, 28) est fendu pour une meilleure adaptation dans son dit logement en creux (22a, 23a).

6. Boîtier selon l'une quelconque des revendications 3 à 5 caractérisé en ce que chaque pied (27, 28) a une forme générale sensiblement cubique, ledit logement en creux correspondant étant de dimension et de forme équivalentes à celles du pied.

7. Boîtier selon l'une quelconque des revendications 3 à 6 caractérisé en ce que la languette de jonction de chaque charnière est, en position fermée du boîtier avec lesdites vis (15, 18) d'étanchéité serrées, quelque peu déformée en étant aplatie à l'intérieur de ladite zone réservée correspondante (22, 23) qui reçoit entièrement la charnière considérée sans que sa languette (30) dépasse aucunement à l'extérieur du boîtier.

## Patentansprüche

1. Gehäuse von allgemeiner parallelepipedischer, rechtwinkliger Form mit einem Körper (11), auf welchem mittels mindestens eines Scharnieres (29), das auf einer Quer- oder Längsseite des Gehäuses angebracht ist, ein Deckel (12) gelenkig angebracht werden kann, der ebenfalls auf dem Körper durch Schrauben (15, 16, 17, 18) befestigt werden kann, welche das Gehäuse zu seinen vier Ecken hin durchqueren, wobei der Körper und der Deckel an jeder ihrer vier Ecken und zu ihrer Innenseite hin ausgesparte, vertiefte Zonen (19-22, 23-26) aufweisen, die um ein inneres Volumen des Gehäuses herum gebildet sind, welches außerhalb der Seite des Körpers (11) durch eine auskragende Umfassungswand (13) begrenzt ist, wobei jede dieser Zonen eine vertiefte Aufnahmestelle (22a, 23a) aufweist, die geeignet ist, ein Fußteil (27, 28) eines genannten Scharnieres aufzunehmen, welches quer über einer gewünschten Seite des Körpers und des Deckels befestigt ist, dadurch gekennzeichnet, daß
- der Deckel (12) entsprechend der auskragenden Umfassungswand (13) des Körpers (11) eine zusammenwirkende Fuge (14) aufweist, außerhalb welcher die genannten ausgesparten, vertieften Zonen (23, 26) gebildet sind, und
- diese vertieften Zonen des Körpers und des Deckels jede seitlich dieser Aufnahmestelle (22a, 23a), die geeignet ist, ein Fußteil (27, 28) des Schamieres aufzunehmen, eine Öffnung (22b, 23b) aufweisen, die zur Mitte des Gehäuses hin für den Durchgang der durchquerenden Schrauben (15, 18) für die Befestigung bei dichter Verschließung des Deckels auf dem Körper abgesetzt gebildet ist.

2. Gehäuse nach Anspruch 1, dadurch gekennzeichnet, daß jede dieser vertieften Aufnahmestellen (22a, 23a) für die Befestigung eines Fußteiles des Scharnieres eine Öffnung (22c, 23c) aufweist, um eine Schraube (32) für die Befestigung des Fußteiles des Scharnieres aufzunehmen.

3. Gehäuse nach einem der vorhergehenden Ansprüche, dadurch gekennzeichnet, daß es zwei Scharniere (29) aufweist, die an den beiden gegenüberliegenden Seiten des Körpers und des Deckels angebracht sind, wobei jedes Scharnier zwei Fußteile (27, 28) aufweist, die die Form eines Stückes haben und durch eine Zunge (30) der allgemeinen Form eines U, eines V oder eines U mit Boden in V-Form aufweisen, wobei die Fußteile und die Zunge in einem einzigen Stück aus flexiblem Kunststoffmaterial gegossen sind.

4. Gehäuse nach Anspruch 3, dadurch gekennzeichnet, daß jedes Fußteil (27, 28) ein Oberteil mit einer Abfasung (27a, 28a) aufweist, um einen Kopf einer Befestigungsschraube aufzunehmen, die geeignet ist, in eine zusammenwirkende Öffnung einzudringen, weiche in jeder der Aufnahmestellen der ausgesparten Zonen des Körpers bzw. des Deckels angeordnet sind.

5. Gehäuse nach Anspruch 3 oder nach Anspruch 4, dadurch gekennzeichnet, daß jedes Fußteil (27, 28) für eine bessere Anpassung in seiner Aufnahmestelle kreuzförmig geschlitzt ist (22a, 23a).

6. Gehäuse nach einem der Ansprüche 3 bis 5, dadurch gekennzeichnet, daß jedes Fußteil (27, 28) eine allgemeine im wesentlichen kubische Form hat, wobei die entsprechende, vertiefte Aufnahmestelle eine dem Fußteil äquivalente Abmessung und Form hat.

7. Gehäuse nach einem der Ansprüche 3 bis 6, dadurch gekennzeichnet, daß die Verbindungszunge jedes Scharniers bei mit diesen geklemmten Dichtigkeitsschrauben (15, 18) geschlossener Position des Gehäuses ein wenig verformt ist, wobei sie im Inneren der entsprechenden, ausgesparten Zone (22, 23), welche das betrachtete Scharnier völlig aufnimmt, abgeflacht ist, ohne daß die Zunge (30) in irgendeiner Weise außerhalb des Behälters hindurchgeht.

## Claims

1. Box of a generally parallelepipedal rectangular shape, comprising a main body (11) on which a cover (12) can be articulated by means of at least one hinge (29) mounted on one lateral or longitudinal side of the box, which cover can also be secured on the body by screws (15,16,17,18) passing through the box at its four corners, the said body and the said cover comprising, in each of their four corners and towards their inner face, reserved recessed areas (19-22, 23-26) formed about an inner space of the box, which is delimited externally, towards the body (11), by a framing projecting wall (13), the said areas each having a recessed mounting (22a, 23a) which can accommodate a foot (27, 28) of a said hinge which is to be secured astride one selected side of the body and the cover, characterised in that:
- the cover (12) comprises, corresponding to the framing projecting wall (13) of the body (11), a cooperating rabbet (14) on the exterior of which the said recessed reserved areas (23,26) are formed; and
- the said recessed reserved areas of the body and the cover each comprise, adjacent the said mounting (22a, 23a) capable of accommodating a foot (27, 28) of the hinge, an aperture (22b, 23b) which is formed so as to be offset towards the centre of the box for the passage of the screw (15, 18) which passes through to secure the cover on the body as a sealed closing.

2. Box according to Claim 1, characterised in that each of the said recessed mountings (22a, 23a) for securing a foot of the hinge comprises an aperture (22c, 23c) to accommodate a screw (32) for securing the foot of the hinge.

3. Box according to any one of the preceding claims, characterised in that it comprises two hinges (29) disposed at the location of the two sides opposite the body and the cover, each hinge comprising two feet (27, 28) having the shape of a pawn connected by a tongue (30) in the general shape of a U, a V or a U with a V-shaped base, the feet and the tongue being moulded as a single piece from flexible plastics material.

4. Box according to Claim 3, characterised in that each foot (27,28) comprises a top with a chamfer (27a, 28a) to accommodate a head of a securing screw adapted to penetrate into a cooperating aperture provided in each of the said mountings of the reserved areas of the body and of the cover respectively.

5. Box according to Claim 3 or Claim 4, characterised in that each foot (27,28) is slit for better adaptation in its said recessed mounting (22a, 23a).

6. Box according to any one of Claims 3 to 5, characterised in that each foot (27, 28) has generally approximately cuboid shape, the said corresponding recessed mounting being of a size and shape equivalent to that of the feet.

7. Box according to any one of Claims 3 to 6, characterised in that the connecting tongue of each hinge is, when the box is in the closed position and the said securing screws (15,18) are locked, somewhat deformed, being flattened at the inside of the said corresponding reserved area (22, 23) which accommodates the whole of the hinge in question without its tongue (30) projecting beyond the exterior of the box at any point.
